# FASCICULE DE BREVET EUROPEEN

(11) **EP 2 891 292 B1**
(45) Date de publication et mention de la délivrance du brevet: **23.10.2019**
(21) Numéro de dépôt: 13745151.4
(22) Date de dépôt: 16.07.2013
(51) Int. Cl.: H04L 29/06

(54) **PROCÉDÉS, DISPOSITIFS ET SYSTÈME DE JOURNALISATION D'APPELS POUR TERMINAUX**
VERFAHREN, VORRICHTUNG UND SYSTEM ZUR ANRUFPROTOKOLLIERUNG FÜR TERMINALS
METHOD, DEVICE AND SYSTEM FOR CALL LOGGING FOR TERMINALS

(30) Priorité: 29.08.2012 FR 1258077
(43) Date de publication de la demande: 08.07.2015
(73) Titulaire: Orange, 75015 Paris (FR)
(72) Inventeur: BOUVET, Bertrand, F-22700 Perros-Guirec (FR)
(86) Numéro de dépôt international: PCT/FR2013/051709
(87) Numéro de publication internationale: WO 2014/033378

(56) Documents cités:
- SIPPING WG J ROSENBERG DYNAMICSOFT: "A Session Initiation Protocol (SIP) Event Package for Registrations; draft-ietf-sipping-reg-event-00.txt", 20021028, vol. sipping, 28 octobre 2002 (2002-10-28) , XP015003447, ISSN: 0000-0004
- ROACH A B: "RFC 3265: Session Initiation Protocol (SIP) - Specific Event Notification", NETWORK WORKING GROUP REQUEST FOR COMMENTS, XX, XX, 1 juin 2002 (2002-06-01), pages 1-38, XP002280672,
- ROACH TEKELEC A B: "SIP-Specific Event Notification; rfc6665.txt", SIP-SPECIFIC EVENT NOTIFICATION; RFC6665.TXT, INTERNET ENGINEERING TASK FORCE, IETF; STANDARD, INTERNET SOCIETY (ISOC) 4, RUE DES FALAISES CH- 1205 GENEVA, SWITZERLAND, 10 July 2012 (2012-07-10), pages 1-53, XP015084119, [retrieved on 2012-07-10]

## Description

### 1. Domaine de l'invention

La demande d'invention se situe dans le domaine des télécommunications, et plus particulièrement dans les architectures de réseau VoIP, et plus précisément dans le domaine de la gestion et de la mise à jour des journaux d'appel du terminal de communication d'un utilisateur.

### 2. Etat de la technique antérieure

Généralement, les journaux d'appel gérés par les terminaux d'utilisateurs sont segmentés en 3 listes distinctes :
- appels reçus,
- appels en absence,
- appels composés.

Les appels sortants émis par un terminal sont classés dans le journal des "appels composés", qu'ils aboutissent ou non, et s'ils aboutissent, ce peut être sur le terminal appelé, ou, suite à un renvoi, sur un terminal tiers ou sur une messagerie vocale.

Les appels entrants qui aboutissent sur le terminal sont classés dans le journal "appels reçus", alors que les appels présentés sur le terminal et qui n'aboutissent pas, sont classés dans le journal des "appels en absence".

En terme d'usage ou d'expérience client, quand par exemple l'utilisateur rentre chez lui, il peut consulter la liste "appels en absence" et si des appels sont présents dans cette liste, rappeler les numéros indiqués.

Pourtant, les informations contenues dans ces journaux sont erronées, incomplètes ou manquantes dans plusieurs situations.

Dans une situation exemplaire, le terminal appelé ne répond pas et l'appel est renvoyé vers un autre équipement de communication qui décroche. Dans ce cas le terminal recevant l'appel en premier classera l'appel dans un journal "appels en absence" alors que l'appel, suite au renvoi, a fini par être reçu, et aurait dû être classé dans un journal "appels reçus". L'information est donc erronée.

De plus, il peut être important de distinguer entre différents types d'équipements de communication vers lesquels un appel est renvoyé, afin d'enrichir l'information. Lorsque l'équipement vers lequel l'appel est renvoyé n'est pas un autre terminal de l'utilisateur appelé, tel que par exemple son terminal mobile, mais sa messagerie, il serait utile de consigner le fait que l'appel a été pris par une messagerie dans un journal d'appel du terminal ayant reçu l'appel en premier, qui l'aura classé dans son journal "appels en absence", ce qui n'est pas complètement faux mais reste incomplet.

Dans une situation analogue, mais côté appelant, un appel émis par le terminal fixe d'un utilisateur n'apparaît pas dans le journal "appels composés" de son terminal mobile, et vice-versa. L'information est donc manquante.

Il existe encore d'autres situations exemplaires où les informations contenues dans ces journaux sont erronées, du fait de la possibilité maintenant offerte aux utilisateurs d'associer plusieurs de leurs terminaux à un même numéro d'appel. Ceci est rendu possible par exemple grâce à la fonction de "forking" (effet fourchette) de la norme SIP (Session Initiation Protocol, défini à l'IETF dans la RFC3261), permettant de présenter un appel à tous les terminaux d'un utilisateur partageant le même identifiant public IMPU (Internet protocol Multimedia Public Identity), que ce soit séquentiellement ou simultanément. Seul le terminal directement impliqué dans l'appel, que ce soit à l'émission ou à la réception, met à jour un de ses journaux d'appel avec cet appel, et pas les autres terminaux partageant pourtant le même IMPU. La RFC6665 "Sip-Specific Event Notification" liste des événements concernant d'autres terminaux auxquels un terminal peut souscrire pour être informé du déroulement d'une communication.

Un des buts de l'invention est de remédier à des inconvénients de l'état de la technique.

### 3. Exposé de l'invention

L'invention vient améliorer la situation à l'aide d'un procédé de notification d'événement relatif au déroulement d'une procédure de traitement d'une session de communication selon la revendication 1.

L'association des équipements à un utilisateur peut exister par le biais d'un même identifiant public de terminal, d'un numéro de client commun attribué à une messagerie, ou d'une relation de renvoi d'appel, temporaire ou non, entre un terminal de l'utilisateur et un terminal d'un autre utilisateur.

Dans un système conforme à la norme SIP, les terminaux associés à un même utilisateur et conformes à la norme SIP partagent un identifiant commun, tel qu'un identifiant IMPU. D'autres terminaux non SIP ou d'autres équipements SIP peuvent être également inclus dans l'ensemble des équipements concernés, par une association au même utilisateur, par exemple par le biais d'un identifiant de client, ou d'un identifiant de serveur de messagerie attribué à l'utilisateur.

L'équipement de mise en œuvre du service de notification d'événement, mettant en œuvre le procédé, reçoit des informations sur le déroulement de la procédure de traitement de la demande, y compris le traitement de la session si elle est établie. Ceci lui permet de déterminer le ou les événements correspondant, qui peuvent être par exemple relatifs à:
- la présentation d'un appel,
- le décroché suite à présentation d'appel,
- l'annulation de l'appel avant le décroché,
- le raccroché à la fin de l'appel,
- le renvoi de l'appel sur une messagerie.

Il notifie ainsi au terminal souscripteur des événements même si, bien que concerné par l'appel, ces événements ne se sont pas produit sur lui, contrairement à la technique antérieure où seuls les événements se produisant sur un terminal sont connus de celui-ci et utilisables pour la mise en à jour d'un des journaux d'appel de ce terminal.

Lorsque l'équipement de mise en œuvre du service de notification d'événement est conforme à la norme SIP, la requête de souscription au service de notification d'événement peut se faire à l'aide d'un message de type SUBSCRIBE, et la notification d'événement peut se faire à l'aide d'un message de type NOTIFY.

L'information indicative d'une occurrence d'un événement sur un équipement peut être reçue dans un message de type "200 OK", que cet équipement soit, ou non, conforme à la norme SIP.

On comprend qu'une telle mise en œuvre du procédé permet de faire bénéficier un terminal SIP des notifications afin qu'il mette à jour un de ses journaux d'appel, même si le terminal impliqué dans l'appel n'est pas conforme à la norme SIP.

Selon un aspect de l'invention, l'information indicative d'une occurrence d'au moins un dit événement sur un dit équipement comprend un identifiant du dit équipement.

Grâce à cet aspect, il est possible de distinguer entre différents équipements et d'enrichir une notification d'événement s'étant produit sur cet équipement.

Par exemple, l'équipement peut être le premier des deux terminaux d'un utilisateur. Lorsque ce premier terminal accepte un appel entrant, son identifiant peut être inclus dans le message "200 OK", qu'il émet vers le réseau afin d'indiquer qu'il a accepté l'appel.

Cet aspect permet d'enrichir le journal "appel reçus" du deuxième terminal de l'utilisateur. En effet, ce deuxième terminal pourra mettre à jour son journal "appels reçus" en y ajoutant l'information que c'est le premier terminal qui a pris part à l'appel, à condition bien sûr qu'il ait souscrit préalablement au service de notification d'événement.

Selon un aspect de l'invention, l'information indicative d'une occurrence d'au moins un dit événement sur un dit équipement comprend une information relative au type du dit équipement.

Grâce à cet aspect, il est possible de distinguer entre différents types d'équipements et d'enrichir une notification d'événement s'étant produit sur cet équipement.

Par exemple, l'équipement peut être une messagerie vocale. Cette information peut être incluse dans le message "200 OK", à l'aide d'une étiquette (Tag) indiquant que l'appel a été accepté par un automate (Tag="Automata"). Ce message est émis par une messagerie SIP vers le serveur d'application SIP pour lui indiquer qu'elle a accepté l'appel.

Cet aspect rend possible la création d'un nouveau type de journal d'appel qui n'existe pas selon la technique antérieure. En effet, le terminal ayant reçu la demande d'établissement d'une session de communication et l'ayant renvoyé vers une messagerie qui lui est associée, pourra mettre à jour un journal "appels renvoyés sur messagerie", à condition bien sûr qu'il ait souscrit préalablement au service de notification d'événement.

Selon un aspect de l'invention, lorsque le dit événement est indicatif de la fin de la dite procédure de traitement, la notification d'événement comprend une information relative à la fin de la souscription au service de notification d'événement, et l'étape d'envoi de la notification est suivi d'une étape de fin de la dite souscription au service de notification d'événement.

Selon cet aspect, la souscription au service de notification prend fin avec la fin de l'appel. La souscription est donc valable pour un seul appel, ce qui a pour avantage de limiter le nombre et la durée des souscriptions à gérer à un instant donné, et diminue les coûts en termes de puissance de calcul nécessaire et en taille mémoire (conservation des contextes de souscription).

Les différents aspects du procédé qui vient d'être décrit peuvent être mis en œuvre indépendamment les uns es autres ou en combinaison les uns avec les autres.

L'invention concerne aussi un procédé de mise à jour de journal d'appel, mis en œuvre par un équipement de communication d'un ensemble d'équipements associés à un utilisateur selon la revendication 5.

Pour une demande d'établissement d'une session de communication concernant plusieurs terminaux, le terminal souscripteur peut mettre à jour le bon journal d'appel sur la base d'événements relatifs au déroulement de la demande y compris le déroulement de la session si elle est établie, grâce aux notification reçues, même si ces événements ne se sont pas produits sur le terminal souscripteur, contrairement à la technique antérieure où un terminal a connaissance uniquement des événements s'étant produit sur lui-même.

Par exemple, si un utilisateur A dispose de deux terminaux TA et TA', et passe un appel sortant depuis TA', le journal "appels composés" du terminal TA, souscripteur, sera mis à jour correctement, contrairement à la technique antérieure où seul le journal "appels composés" de TA est mis à jour.

De même, par exemple, si un utilisateur B dispose de deux terminaux TB et TB', et accepte un appel entrant sur TB', le journal "appels composés" du terminal TB, souscripteur, sera mis à jour correctement, contrairement à la technique antérieure où soit aucun journal de TB n'est mis à jour, ou c'est le journal "appels en absence" de TB qui est mis à jour si l'appel entrant a été présenté aux deux terminaux TB et TB'.

Dans un autre exemple, si les utilisateurs A et B configurent un renvoi des appels d'un terminal TA de A vers un terminal TB de B, typiquement pour assurer une permanence durant un congé de l'utilisateur A, le journal "appels reçus" du terminal TA sera mis à jour lorsqu'un appel renvoyé vers le terminal TB est accepté, à condition bien sûr que le terminal TA ait souscrit préalablement au service de notification d'événement. Dans la technique antérieure, au contraire, il n'est pas possible de mettre à jour un journal d'appel du terminal TA sur la base d'un événement s'étant produit sur le terminal TB d'un autre utilisateur, même lorsqu'une relation de renvoi existe entre les deux terminaux.

En outre, la mise à jour des journaux d'appel sur la base d'informations générées par le réseau, plutôt que générées localement par le terminal comme dans la technique antérieure, permet d'éviter les litiges entre utilisateurs et fournisseurs de services de télécommunication. Par exemple, la durée des appels ne peut être contestée, la mesure de la durée d'appel étant réalisée par le réseau et non plus par le terminal.

Dans une mise en œuvre où le terminal souscripteur est un terminal conforme à la norme SIP, l'émission d'une requête de souscription peut se faire à l'aide d'un message de type SUBSCRIBE, et la réception d'une notification peut se faire à l'aide d'un message de type NOTIFY. La fin de la procédure de traitement d'une session de communication est indiquée, par exemple, par un message NOTIFY "Call release" correspondant à une fin normale de session, ou par un message NOTIFY "Call abandoned" correspondant à un abandon de la demande avant l'établissement de la session. La fin de la procédure de traitement peut également être indiquée par une information relative à la fin de la souscription au service de notification d'événement, "End of Subscription", comprise dans le message NOTIFY.

Selon un aspect de l'invention, l'étape d'émission d'une requête de souscription est déclenchée par la réception d'une demande d'établissement d'une session de communication.

Grâce à cet aspect, la souscription au service de notification d'événement est effectuée par un terminal sur présentation de l'appel uniquement. Il n'est donc pas nécessaire que la souscription soit effectuée à l'avance en prévision d'un ou plusieurs appels. Empêcher de cette manière qu'une souscription soit déclenchée sans qu'un appel lui soit associé a pour avantage de limiter le nombre et la durée des souscriptions à gérer à un instant donné, et diminue les coûts en termes de puissance de calcul nécessaire et de taille mémoire dans l'équipement de réseau responsable des souscriptions.

L'invention concerne aussi un dispositif de notification d'événement relatif au déroulement d'une procédure de traitement d'une session de communication selon la revendication 7.

Ce dispositif peut être mis en œuvre dans un équipement du réseau chargé du traitement de la demande d'établissement d'une session de communication, de la gestion de la signalisation liée à la demande, ou du transport des données de la session de communication. Dans une mise en œuvre de l'invention selon la norme SIP, cet équipement peut être un serveur d'application SIP.

L'invention concerne aussi un dispositif de mise à jour de journal d'appel, mis en œuvre par un équipement de communication d'un ensemble d'équipements associés à un utilisateur selon la revendication 8.

L'invention concerne aussi un serveur d'application d'un réseau de communications selon la revendication 9.

Un tel serveur d'application est par exemple un serveur d'application SIP. Ce peut être soit celui mettant en œuvre les services téléphoniques SIP dits "originating", du côté du réseau où se trouve le terminal appelant, soit celui mettant en œuvre les services téléphoniques SIP dits "terminating", du côté du réseau où se trouve le terminal appelé, soit un autre serveur d'application SIP, dédié ou non à la gestion des souscriptions aux notifications d'événement.

L'invention concerne aussi un terminal selon la revendication 10.

Un tel terminal est par exemple un appareil téléphonique ou visiophonique doté de journaux d'appels consultables par l'utilisateur, conforme ou non à la norme SIP.

L'invention concerne aussi un système de gestion de journaux d'appel selon la revendication 11.

Un tel système comprend par exemple un ou plusieurs serveurs d'application SIP et des terminaux SIP.

L'invention concerne aussi un programme d'ordinateur, comprenant des instructions pour la mise en œuvre des étapes du procédé de notification d'événement selon la revendication 12.

L'invention concerne aussi un programme d'ordinateur, comprenant des instructions pour la mise en œuvre des étapes du procédé de mise à jour de journal d'appel selon la revendication 13. Les revendications dépendantes décrivent des modes de réalisation préférés de l'invention.

### 4. Présentation des figures

D'autre avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
- la figure 1 présente un exemple de mise en œuvre du procédé de notification d'événement, selon un premier mode de réalisation de l'invention, lorsque l'utilisateur auquel sont associés les terminaux de l'ensemble est l'utilisateur appelant,
- la figure 2 présente un exemple de mise en œuvre du procédé de notification d'événement, selon un deuxième mode de réalisation l'invention, lorsque l'utilisateur auquel sont associés les terminaux de l'ensemble est l'utilisateur appelé,
- la figure 3 présente un exemple de mise en œuvre du procédé de notification d'événement, selon un autre mode de réalisation de l'invention, lorsque l'utilisateur auquel sont associés les terminaux de l'ensemble est l'utilisateur appelé,
- la figure 4 présente un exemple de mise en œuvre du procédé de mise à jour de journal d'appel selon l'invention,
- la figure 5 présente un exemple de structure d'un dispositif de notification d'événement, selon un aspect de l'invention,
- la figure 6 présente un exemple de structure d'un dispositif de mise à jour de journal d'appel, selon un aspect de l'invention.

### 5. Description détaillée d'au moins un mode de réalisation de l'invention

Dans la suite de la description, on considère le cas de modes de réalisation de l'invention par des équipements de réseau et des terminaux d'utilisateur conformes à la norme SIP. L'invention ne se limite pas à ce cas, et s'applique à d'autres normes, telles que H.323 (ensemble de protocoles de communication de la voix, de l'image et de données sur IP développé par l'UIT-T), ou CAT-Iq (protocole de communication entre une base et des terminaux sans fil développé par le DECT Forum).

L'invention a pour contexte le déroulement d'une procédure de traitement d'une session de communication destinée à être portée par un équipement de communication d'un ensemble d'équipements associés à un utilisateur.

Par "procédure de traitement d'une session de communication", il faut entendre la procédure de traitement complète, incluant le traitement de demande d'établissement de la session, et, si elle est établie, le traitement de la session en soi et le traitement de sa fin.

Par "ensemble d'équipements associés à un utilisateur" il faut entendre un ensemble d'équipements, préalablement constitué ou non, partageant par exemple un identifiant commun (même identifiant IMPU selon la norme SIP, ou même numéro de client associé à l'équipement) et/ou partageant un lien tel qu'un renvoi d'appel entre deux numéros d'appel, configuré pour une durée quelconque.

Dans le contexte des sessions de communication SIP, une "demande d'appel" est synonyme de "demande d'établissement de session".

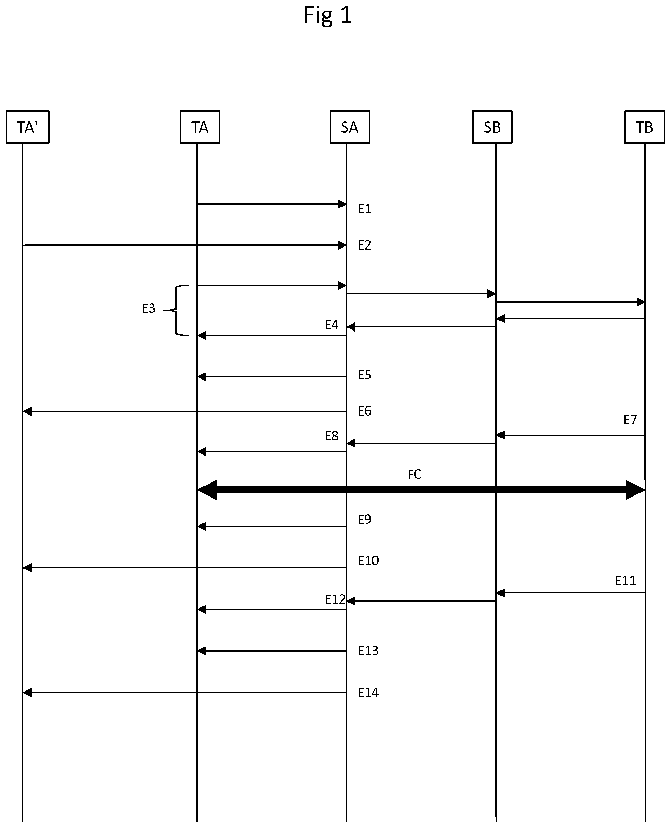

La **figure 1** présente un exemple de mise en œuvre du procédé de notification d'événement, selon un **premier mode de réalisation** de l'invention, lorsque l'utilisateur auquel sont associés les terminaux de l'ensemble est l'utilisateur appelant.

Dans cet exemple, l'utilisateur A cherche à appeler l'utilisateur B. L'ensemble d'équipements concernés selon l'invention comprend les terminaux TA et TA', associés à l'utilisateur A. Le terminal TB est associé à l'utilisateur B et ne fait pas partie de l'ensemble. Les terminaux TA et TA' dialoguent avec un équipement de réseau SA mettant en œuvre le procédé. Le terminal TB dialogue avec un équipement de réseau SB, lui-même dialoguant avec l'équipement SA.

Lors d'une étape E1, SA reçoit de TA une requête de souscription à un service de notification d'événement.

Lors d'une étape E2, SA reçoit de TA' une requête de souscription à un service de notification d'événement. Le message reçu lors de l'étape E2 est similaire à celui de l'étape E1.

Les messages reçus lors des étapes E1 et E2 peuvent se matérialiser sous forme d'un message de type "SUBSCRIBE (Event package = Call Log)" selon une modification de la norme SIP, dont la réception est accusée par un message de type "200 OK", non représenté dans la figure, selon la norme SIP. Un tel message SUBSCRIBE modifié comprend par exemple les paramètres suivants:
- le paramètre "Request URI" qui contient le numéro de téléphone du terminal ainsi que le nom de domaine du service correspondant à l'Event Package Call Log,
- le paramètre "To" identique au paramètre Request URI,
- le paramètre "From" qui contient le Numéro de téléphone du terminal et son nom de domaine SIP,
- le paramètre "Event" qui contient le nom du service "Call Log",
- le paramètre "Contact" qui contient l'adresse de joignabilité du terminal TA.

Suite à l'envoi du message d'acquittement "200 OK" par l'équipement SA vers le terminal TA, le serveur SA envoie un message de notification vers le terminal TA, non représenté dans la figure, l'informant qu'aucun appel n'est en cours. Ce message est acquitté par le terminal TA via un "200 OK", non représenté sur la figure. Il en est de même pour le terminal TA'. Lors d'une étape E3 d'appel, connue et indépendante du procédé, TA émet vers TB une demande d'établissement d'une session de communication. Cette demande est relayée successivement par SA et SB avant d'être reçue par TB et peut se matérialiser initialement sous la forme d'un message de type "INVITE (From=A, RURI=B, To=B)" selon la norme SIP. En réponse, TB émet vers TA un message de type "180 Ringing" relayé successivement par SB et SA, indiquant que l'appel a été présenté à TB et est en attente d'un décroché.

Lors d'une étape E4, le message "180 Ringing" est donc reçu par SA. SA détecte que ce message est une information indicative d'une occurrence d'un événement affectant TA, l'événement étant l'arrivée sur TB de la demande d'appel de TA.

Lors d'une étape E5, SA émet vers TA une notification correspondant à l'événement de l'étape E4.

Lors d'une étape E6, SA émet vers TA' une notification correspondant à l'événement de l'étape E4. Le message émis lors de l'étape E6 est identique à celui de l'étape E5.

Les messages émis lors des étapes E5 et E6 peuvent se matérialiser sous forme d'un message de type "NOTIFY (outgoing call in progress - Date Time)" selon une évolution de la norme SIP, dont la réception peut être accusée par un message de type "200 OK", non représenté dans la figure, selon la norme SIP. Un tel message NOTIFY modifié comprend par exemple les paramètres suivants:
- le paramètre "request URI" qui est valorisé avec l'adresse de contact du terminal,
- le paramètre "To" qui contient l'adresse publique du terminal TA,
- le paramètre "From" qui contient l'adresse publique du service "Call Log" géré par l'équipement SA,
- des paramètres liés à l' "event package" "Call Log" du type "Outgoing Call in Progress", "date", "time", "remote party number".

Lors d'une étape E7 de prise d'appel, connue et indépendante du procédé, TB émet vers TA une réponse positive à sa demande d'établissement d'une session de communication. Cette réponse est relayée successivement par SB et SA avant d'être reçue par TA et peut se matérialiser sous la forme d'un message de type "200 OK" selon la norme SIP, indiquant que l'appel a été accepté par TB. La session FC entre TA et TB est établie suite à cette étape.

Lors d'une étape E8, le message "200 OK" est donc reçu par SA. SA détecte que ce message est une information indicative d'une occurrence d'un événement affectant TA, l'événement étant l'acceptation (autrement dit le "décroché") par TB de la demande d'appel de TA.

Lors d'une étape E9, SA émet vers TA une notification correspondant à l'événement de l'étape E8.

Lors d'une étape E10, SA émet vers TA' une notification correspondant à l'événement de l'étape E8. Le message émis lors de l'étape E10 est identique à celui de l'étape E9.

Les messages émis lors des étapes E9 et E10 peuvent par exemple se matérialiser sous forme d'un message de type "NOTIFY (call accepted - Live Call - Media=visio - Date Time)" selon une modification de la norme SIP (se référer à l'étape E5), dont la réception peut être accusée par un message de type "200 OK", non représenté dans la figure, selon la norme SIP.

Lors d'une étape E11 de fin d'appel, connue et indépendante du procédé, TB raccroche, ce qui se traduit par l'émission vers TA d'un message de fin de session de communication, relayé successivement par SB et SA, pouvant se matérialiser sous la forme d'un message de type "BYE" selon la norme SIP, indiquant qu'il a été mis fin à l'appel.

Lors d'une étape E12, le message "BYE" est donc reçu par SA. SA détecte que ce message est une information indicative d'une occurrence d'un événement affectant TA, l'événement étant la fin de l'appel (autrement dit le "raccroché") par l'un des terminaux TB ou TA.

Lors d'une étape E13, SA émet vers TA une notification correspondant à l'événement de l'étape E12.

Lors d'une étape E14, SA émet vers TA' une notification correspondant à l'événement de l'étape E12. Le message émis lors de l'étape E14 est identique à celui de l'étape E13.

Les messages émis lors des étapes E13 et E14 peuvent par exemple se matérialiser sous forme d'un message de type "NOTIFY (call release - Duration)" selon une évolution de la norme SIP (se référer à l'étape E5), dont la réception peut être accusée par un message de type "200 OK", non représenté dans la figure, selon la norme SIP.

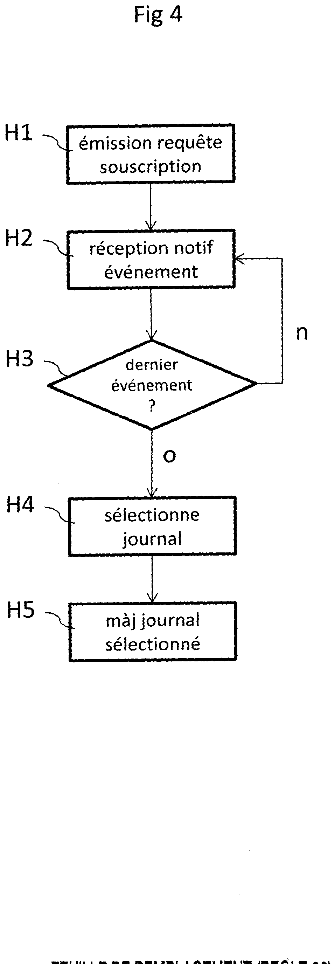

Lors d'étapes décrites en relation avec le procédé de mise à jour de journal d'appel, illustré dans la figure 4, le terminal TA' sélectionne son journal "appels composés" et le met à jour, sur la base des notifications reçues suite aux étapes E6, E10 et E14.

Similairement, le terminal TA sélectionne son journal "appels composés" et le met à jour, sur la base des notifications reçues suite aux étapes E5, E9 et E13.

On comprend que grâce au procédé de notification d'événement, le terminal TA', bien que n'ayant pas participé à la session FC, est capable de sélectionner le bon journal d'appel parmi ses journaux d'appel, et de le mettre à jour correctement avec des informations pertinentes telles que le numéro appelé et la durée de l'appel, contrairement à la technique antérieure où aucun de ses journaux d'appel n'est mis à jour.

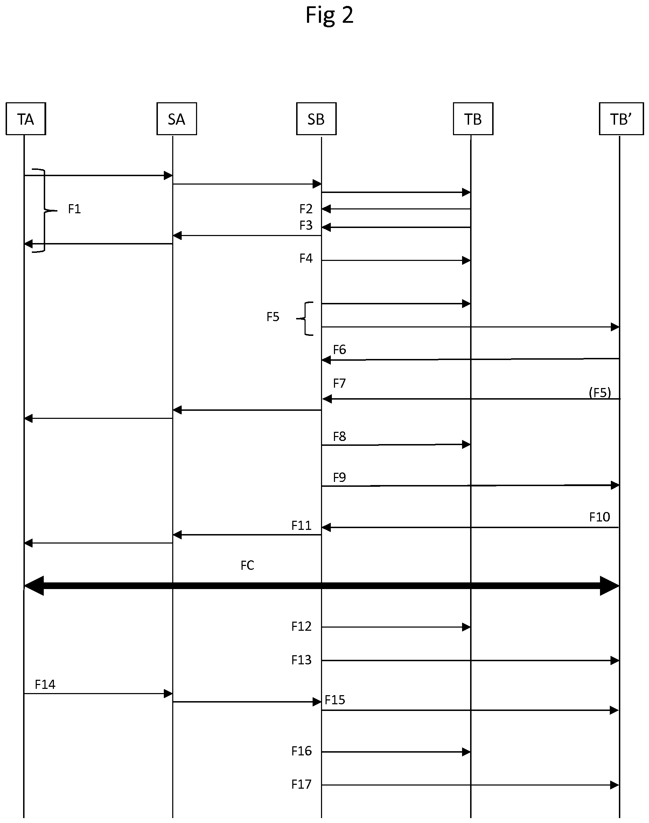

La **figure 2** présente un exemple de mise en œuvre du procédé de notification d'événement, selon un **deuxième mode de réalisation** de l'invention, lorsque l'utilisateur auquel sont associés les terminaux de l'ensemble est l'utilisateur appelé.

Dans cet exemple, l'utilisateur A cherche à appeler l'utilisateur B. L'ensemble d'équipements concernés selon l'invention comprend les terminaux TB et TB', associés à l'utilisateur B. Selon une technique connue, l'utilisateur a configuré ses terminaux de façon à ce qu'une demande d'appel soit dirigée en priorité vers TB, et de façon à ce que la demande soit renvoyée de TB vers TB' lorsque TB ne décroche pas avant expiration d'un délai déterminé DD. Le terminal TA est associé à l'utilisateur A et ne fait pas partie de l'ensemble. Les terminaux TB et TB' dialoguent avec un équipement de réseau SB mettant en œuvre le procédé. Le terminal TA dialogue avec un équipement de réseau SA, lui-même dialoguant avec l'équipement SB.

Lors d'une étape F1 d'appel, connue et indépendante du procédé, TA émet vers TB une demande d'établissement d'une session de communication. Cette demande est relayée successivement par SA et SB avant d'être reçue par TB et peut se matérialiser initialement sous la forme d'un message de type "INVITE (From=A, RURI=B, To=B)" selon la norme SIP. En réponse, TB émet vers TA un message de type "180 Ringing" relayé successivement par SB et SA, indiquant que l'appel a été présenté à TB et est en attente d'un décroché.

Lors d'une étape F2, SB reçoit de TB une requête de souscription à un service de notification d'événement. C'est la réception de la demande d'appel par TB consécutive à l'étape F1 qui déclenche l'émission par TB de cette requête.

Le message reçu lors de l'étape F2 peut par exemple se matérialiser sous forme d'un message de type "SUBSCRIBE (Event package = Call Log)" selon une évolution de la norme SIP (se référer à l'étape E1), dont la réception peut être accusée par un message de type "200 OK", non représenté dans la figure, selon la norme SIP.

Lors d'une étape F3, le message "180 Ringing" consécutif à la demande d'établissement d'une session de communication de l'étape F1 est reçu par SB. SB détecte que ce message est une information indicative d'une occurrence d'un événement affectant TB, l'événement étant l'arrivée sur TB de la demande d'appel de TA.

Lors d'une étape F4, SB émet vers TB une notification correspondant à l'événement de l'étape F3.

Le message émis lors de l'étape F4 peut par exemple se matérialiser sous forme d'un message de type "NOTIFY (call presentation)" selon une évolution de la norme SIP (se référer à l'étape E5), dont la réception peut être accusée par un message de type "200 OK", non représenté dans la figure, selon la norme SIP.

Lors d'une étape F5 de renvoi d'appel, connue et indépendante du procédé, suite à expiration du délai déterminé DD, SB émet vers TB une annulation de la demande d'établissement d'une session de communication. Ce message peut se matérialiser sous la forme d'un message de type "CANCEL" selon la norme SIP, dont la réception peut être accusée par un message de type "200 OK", non représenté dans la figure, selon la norme SIP. Toujours lors de cette étape F5, SB émet ensuite vers TB' une demande d'établissement d'une session de communication. Cette demande peut se matérialiser sous la forme d'un message de type "INVITE (From=A, RURI=AoC TB', To=B)" selon la norme SIP. En réponse, TB' émet vers TA un message de type "180 Ringing" relayé successivement par SB et SA, indiquant que l'appel a été présenté à TB' et est en attente d'un décroché.

Lors d'une étape F6, SB reçoit de TB' une requête de souscription à un service de notification d'événement. C'est la réception de la demande d'appel par TB' consécutive à l'étape F5 qui déclenche l'émission par TB'de cette requête.

Le message reçu lors de l'étape F6 peut par exemple se matérialiser sous forme d'un message de type "SUBSCRIBE (Event package = Call Log)" selon une évolution de la norme SIP (se référer à l'étape E1), dont la réception peut être accusée par un message de type "200 OK", non représenté dans la figure, selon la norme SIP.

Lors d'une étape F7, le message "180 Ringing" consécutif à la demande d'établissement d'une session de communication de l'étape F5 est reçu par SB. SB détecte que ce message est une information indicative d'une occurrence d'un événement affectant TB', l'événement étant l'arrivée sur TB' de la demande d'appel de TA.

Lors d'une étape F8 optionnelle, SB émet vers TB une notification correspondant à l'événement de l'étape F7. Cette étape est optionnelle car en général l'information transportée par cette notification est rendue obsolète par la suite, sauf si TB possède un journal d'appel dédié aux appels présentés à d'autres terminaux.

Lors d'une étape F9, SB émet vers TB' une notification correspondant à l'événement de l'étape F7.

Les messages émis lors des étapes F8 et F9 peuvent par exemple se matérialiser sous forme d'un message de type "NOTIFY (call presentation)" selon une évolution de la norme SIP (se référer à l'étape E5), dont la réception peut être accusée par un message de type "200 OK", non représenté dans la figure, selon la norme SIP.

Lors d'une étape F10 de prise d'appel, connue et indépendante du procédé, TB' émet vers TA une réponse positive à sa demande d'établissement d'une session de communication. Cette réponse est relayée successivement par SB et SA avant d'être reçue par TA et peut se matérialiser sous la forme d'un message de type "200 OK" selon la norme SIP, indiquant que l'appel a été accepté par TB'. La session FC entre TA et TB est établie suite à cette étape.

Lors d'une étape F11, le message "200 OK" est donc reçu par SB. SB détecte que ce message est une information indicative d'une occurrence d'un événement affectant TB', l'événement étant l'acceptation (autrement dit le "décroché") par TB' de la demande d'appel de TA.

Lors d'une étape F12, SB émet vers TB une notification correspondant à l'événement de l'étape F11.

Lors d'une étape F13, SB émet vers TB' une notification correspondant à l'événement de l'étape F11. Le message émis lors de l'étape F13 est identique à celui de l'étape F12.

Les messages émis lors des étapes F12 et F13 peuvent par exemple se matérialiser sous forme d'un message de type "NOTIFY (call accepted - Live Call - Media=standard voice - Date Time)" selon une évolution de la norme SIP (se référer à l'étape E5), dont la réception peut être accusée par un message de type "200 OK", non représenté dans la figure, selon la norme SIP.

Lors d'une étape F14 de fin d'appel, connue et indépendante du procédé, TA raccroche, ce qui se traduit par l'émission vers TB d'un message de fin de session de communication, relayé successivement par SA et SB, pouvant se matérialiser sous la forme d'un message de type "BYE" selon la norme SIP, indiquant que qu'il a été mis fin à l'appel.

Lors d'une étape F15, le message "BYE" est donc reçu par SB. SB détecte que ce message est une information indicative d'une occurrence d'un événement affectant TB', l'événement étant la fin de l'appel (autrement dit le "raccroché") par l'un des terminaux TA ou TB'.

Lors d'une étape F16, SB émet vers TB une notification correspondant à l'événement de l'étape F15.

Lors d'une étape F17, SB émet vers TB' une notification correspondant à l'événement de l'étape F15. Le message émis lors de l'étape F17 est identique à celui de l'étape F16.

Les messages émis lors des étapes F16 et F17 peuvent par exemple se matérialiser sous forme d'un message de type "NOTIFY (call release - Duration)" selon une évolution de la norme SIP (se référer à l'étape E5), dont la réception peut être accusée par un message de type "200 OK", non représenté dans la figure, selon la norme SIP.

Lors d'étapes décrites en relation avec le procédé de mise à jour de journal d'appel, illustré dans la figure 4, le terminal TB sélectionne son journal "appel reçus" et le met à jour, sur la base des notifications reçues suite aux étapes F4, F12 et F16.

Similairement, le terminal TB' sélectionne son journal "appels reçus" et le met à jour, sur la base des notifications reçues suite aux étapes F9, F13 et F17.

On comprend que grâce au procédé de notification d'événement, le terminal TB, bien que n'ayant pas participé à la session FC, est capable de sélectionner le bon journal d'appel parmi ses journaux d'appel, et de le mettre à jour correctement avec des informations pertinentes telles que le numéro appelant et la durée de l'appel, contrairement à la technique antérieure, où il aurait erronément sélectionné son journal "appels en absence".

Dans un **troisième mode de réalisation,** en relation avec la figure 2, l'information reçue lors de l'étape F11 comprend un identifiant de TB'. L'étape F12 et l'étape F13 sont remplacées respectivement par une étape F12' et une étape F13', non illustrées, où la notification émise comprend cet identifiant de TB', en plus des éléments transmis lors de l'étape F12 et de l'étape F13, respectivement.

Avantageusement, il est ainsi possible d'enrichir la mise à jour du journal "appels reçus" de TB avec une information indiquant que c'est le terminal TB' qui a participé à la session FC, et non le terminal TB.

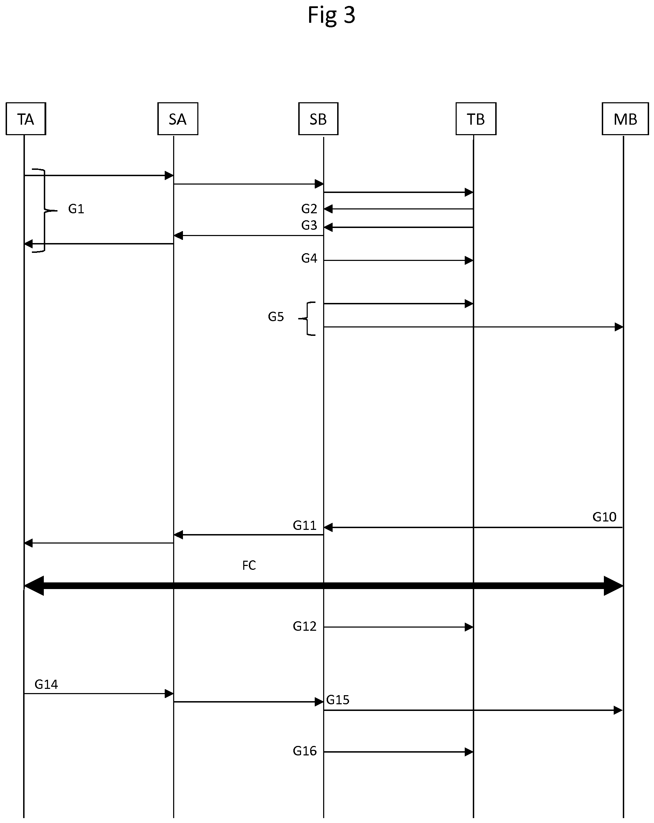

La **figure 3** présente un exemple de mise en œuvre du procédé de notification d'événement, selon un **quatrième mode de réalisation** de l'invention, lorsque l'utilisateur auquel sont associés les terminaux de l'ensemble est l'utilisateur appelé.

Dans cet exemple, l'utilisateur A cherche à appeler l'utilisateur B. L'ensemble d'équipements concernés selon l'invention comprend le terminal TB et l'équipement de messagerie MB, associés à l'utilisateur B. Selon une technique connue, l'utilisateur a configuré ses terminaux de façon à ce qu'une demande d'appel vers TB renvoyée de TB vers sa messagerie vocale MB lorsque TB ne décroche pas avant expiration d'un délai déterminé DD. Le terminal TA est associé à l'utilisateur A et ne fait pas partie de l'ensemble. Le terminal TB et l'équipement MB dialoguent avec un équipement de réseau SB mettant en œuvre le procédé. Le terminal TA dialogue avec un équipement de réseau SA, lui-même dialoguant avec l'équipement SB.

Les étapes G1 à G5 sont identiques respectivement aux étapes F1 à F5 décrites en relation avec la figure 2.

Lors d'une étape G10 faisant suite à l'étape G5, la réponse émise par la messagerie MB consécutive à l'acceptation de l'appel par celle-ci inclut une information relative au type d'équipement qu'est la messagerie MB. Selon une technique connue, cette réponse peut se matérialiser sous la forme d'un message SIP de type "200 OK" comprenant une étiquette "Tag=Automata".

Lors d'une étape G11, le message "200 OK" est donc reçu par SB. SB détecte que ce message est une information indicative d'une occurrence d'un événement affectant MB, l'événement étant l'acceptation (autrement dit le "décroché") par MB de la demande d'appel de TA.

Lors d'une étape G12, SB émet vers TB une notification correspondant à l'événement de l'étape G11. Le message émis lors de cette étape G12 peut par exemple se matérialiser sous forme d'un message de type "NOTIFY (call accepted - Voice Mail - Media=HD voice - Date Time)" selon une évolution de la norme SIP (se référer à l'étape E5), dont la réception peut être accusée par un message de type "200 OK", non représenté dans la figure, selon la norme SIP.

Les étapes suivantes, G14, G15 et G16, sont identiques respectivement aux étapes F14, F15 et F16 décrites en relation avec la figure 2.

Lors d'étapes décrites en relation avec le procédé de mise à jour de journal d'appel, illustré dans la figure 4, le terminal TB sélectionne son journal "appels renvoyés sur messagerie" et le met à jour, sur la base des notifications reçues suite aux étapes G4, G12 et G16.

On comprend que grâce au procédé de notification d'événement, le terminal TB, bien que n'ayant pas participé à la session FC, est capable de sélectionner correctement le journal "appels renvoyés sur messagerie" parmi ses journaux d'appel, et de le mettre à jour correctement avec des informations pertinentes telles que le numéro appelant et la durée du message laissé, contrairement à la technique antérieure, où il aurait erronément sélectionné son journal "appels en absence".

Dans un **cinquième mode de réalisation,** en relation avec la figure 3, l'équipement mettant en œuvre le procédé de notification d'événement déduit de l'information reçue lors de l'étape G15 ("BYE", signifiant un raccroché du terminal TA ou de la messagerie MB impliquées dans l'appel) que la procédure de traitement de l'appel est terminée.

Dans une étape G16' non illustrée, remplaçant l'étape G16, la notification émise comprend, en plus des éléments transmis lors de l'étape G16, une information relative à la fin de la souscription. Le message émis lors de cette étape G16' peut par exemple se matérialiser sous forme d'un message de type "NOTIFY (call release - Duration - End of subscription)" selon une évolution de la norme SIP.

Dans une étape G17', non illustrée, parallèle ou faisant suite à l'étape G16', il est mis fin à la souscription requise lors de l'étape G2.

Avantageusement, l'équipement mettant en œuvre le procédé de notification d'événement n'est pas obligé de mémoriser la souscription une fois l'appel terminé, et le terminal ayant requis la souscription sait qu'il devra renouveler sa requête en fonction de ses besoins. Cela permet en particulier d'optimiser les ressources mémoire de l'équipement mettant en œuvre le procédé.

Les modes de réalisations qui viennent d'être décrits peuvent être combinés de diverses manières.

La **figure 4** présente un exemple de mise en œuvre du procédé de mise à jour de journal d'appel selon l'invention.

Les étapes sont mises en œuvre par un terminal concerné par une demande d'établissement d'une session de communication, dit terminal souscripteur.

Lors d'une étape H1, le terminal souscripteur émet une requête de souscription à un service de notification d'événement pour au moins un événement relatif au déroulement d'une procédure de traitement de cette demande d'établissement d'une session de communication susceptible de se produire sur un équipement d'un ensemble d'équipements associés à un même utilisateur concerné par la demande.

Le message émis lors de l'étape H1 peut se matérialiser sous forme d'un message de type "SUBSCRIBE (Event package = Call Log)" selon une évolution de la norme SIP (se référer à l'étape E1).

Lors d'une étape H2, le terminal reçoit une notification d'événement signalant une occurrence d'un événement sur un des équipements de l'ensemble, et en mémorise le contenu.

Le message reçu lors de l'étape H2 peut se matérialiser sous forme d'un message de type "NOTIFY (paramètre 1, paramètre 2, etc)" selon une évolution de la norme SIP (se référer à l'étape E5).

Lors d'une étape H3, le terminal détermine, en fonction de la notification reçue, si l'événement signalé est indicatif de la fin de la procédure de traitement. Si un des paramètres compris dans le message "NOTIFY" est par exemple "Call release" ou "Call abandoned", cela signifie respectivement que l'appel établi est terminé, ou que la demande d'appel a été abandonnée avant établissement. Ces paramètres sont indicatifs de la fin de la procédure de traitement.

Dans un des modes de réalisation du procédé de notification, décrit précédemment, un des paramètres compris dans le message "NOTIFY" peut aussi être "End of subscription". Cela signifie que le terminal souscripteur ne recevra plus d'autre notification concernant cet appel, et ce paramètre est donc également considéré comme étant indicatif de la fin de la procédure de traitement.

Si, à l'issue de l'étape H3, il n'est pas déterminé que la fin de la procédure de traitement est atteinte, le procédé revient à l'étape H2.

Sinon il passe à une étape H4. Lors de l'étape H4, le terminal souscripteur sélectionne un de ses journaux d'appel en fonction du contenu mémorisé de la ou des notifications reçues.

C'est le journal "appels composés" si par exemple des messages "NOTIFY" comprennent "Outgoing call in progress" et "Call release".

C'est le journal "appels reçus" si par exemple des messages "NOTIFY" comprennent "Call presentation" et "Call release".

C'est le journal "appels en absence" si par exemple un message "NOTIFY" comprend "Call presentation" et aucun message "NOTIFY" ne comprend " Call accepted".

C'est le journal "appels abandonnés" si par exemple un message "NOTIFY" comprend "Call abandoned".

C'est le journal "appels renvoyés sur messagerie" si par exemple un message "NOTIFY" comprend "Automata".

Lors d'une étape H5 faisant suite à l'étape H4, le terminal met à jour le journal sélectionné à l'aide du contenu mémorisé de la ou des notifications reçues.

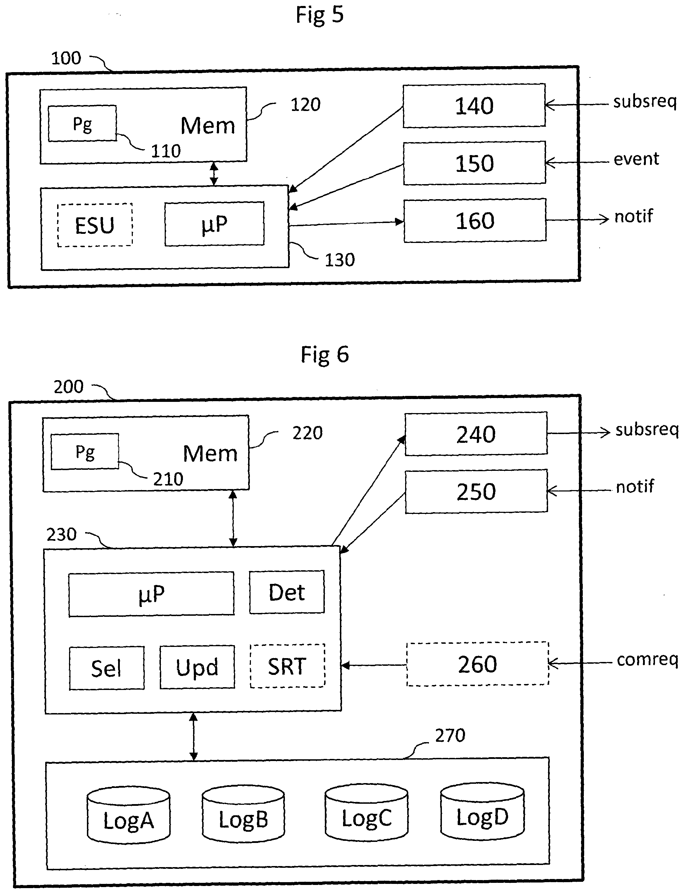

En relation avec la **figure 5****,** on présente maintenant un exemple de structure d'un dispositif de notification d'événement, selon un aspect de l'invention.

Le dispositif 100 de notification d'événement met en œuvre le procédé de notification d'événement tel que décrit ci-dessus.

Un tel dispositif 100 peut être intégré dans un serveur d'application SIP, tel que le serveur d'application téléphonique SIP d'origine, du côté appelant, ou le serveur d'application téléphonique SIP destination, du côté appelé, selon que l'ensemble d'équipements concerné par le procédé est un ensemble d'équipement associés respectivement à un utilisateur appelant ou appelé. Le dispositif 100 peut également être mis en œuvre dans un serveur d'application SIP distinct des serveurs d'application téléphoniques SIP d'origine ou de destination, dans un équipement du réseau dédié ou non à la notification d'événement.

Par exemple, le dispositif 100 comprend une unité de traitement 130, équipée par exemple d'un microprocesseur µP, et pilotée par un programme d'ordinateur 110, stocké dans une mémoire 120 et mettant en œuvre le procédé de notification d'événement selon l'invention. A l'initialisation, les instructions de code du programme d'ordinateur 110 sont par exemple chargées dans une mémoire RAM, avant d'être exécutées par le processeur de l'unité de traitement 130.

Un tel dispositif 100 comprend :
- un module de réception 140, apte à recevoir une requête de souscription à un service de notification d'événement (subsreq) pour au moins un événement relatif au déroulement d'une procédure de traitement d'une session de communication, en provenance d'un terminal souscripteur,
- un module de réception 150, apte à recevoir une information indicative d'une occurrence d'au moins un événement (event),
- un module d'envoi 160, apte à envoyer une notification d'événement (notif) signalant l'occurrence, à destination du terminal souscripteur.

Avantageusement, l'unité de traitement 130 peut comprendre:
- une unité ESU de fin de souscription, apte à mettre fin à la souscription lorsque l'information indicative d'une occurrence d'au moins un événement est indicative de la fin de la procédure de traitement.

En relation avec la **figure 6****,** on présente maintenant un exemple de structure d'un dispositif de mise à jour de journal d'appel, selon un aspect de l'invention.

Le dispositif 200 de mise à jour de journal d'appel met en œuvre le procédé de mise à jour de journal d'appel tel que décrit ci-dessus.

Un tel dispositif 200 peut être intégré dans un terminal de communication mobile ou fixe, par exemple conforme à la norme SIP, utilisable par une personne physique.

Par exemple, le dispositif 200 comprend une unité de traitement 230, équipée par exemple d'un microprocesseur µP, et pilotée par un programme d'ordinateur 210, stocké dans une mémoire 220 et mettant en œuvre le procédé de notification d'événement selon l'invention. A l'initialisation, les instructions de code du programme d'ordinateur 210 sont par exemple chargées dans une mémoire RAM, avant d'être exécutées par le processeur de l'unité de traitement 230.

Un tel dispositif 200 comprend :
- un module d'émission 240, apte à émettre une requête de souscription à un service de notification d'événement (subsreq) pour au moins un événement relatif au déroulement d'une procédure de traitement d'une session de communication,
- un module de réception 250, apte à recevoir une notification d'événement (notif) signalant l'occurrence d'au moins un événement.

Avantageusement, un tel dispositif 200 peut comprendre en outre:
- un module de réception 260, apte à recevoir une demande d'établissement d'une session de communication (comreq).

L'unité de traitement 230 comprend:
- une unité Det de détermination, apte à déterminer la fin de la procédure de traitement d'une session de communication,
- une unité Sel de sélection, apte à sélectionner, parmi un groupe de journaux d'appel 270, un journal d'appel (LogA, LogB, LogC, LogD) en fonction d'un ou plusieurs événements,
- une unité Upd de mise à jour, apte à mettre à jour le journal d'appel sélectionné en fonction d'un ou plusieurs événements.

Par exemple, LogA est le journal "appels composés", LogB est le journal "appels reçus", LogC est le journal "appels renvoyés sur messagerie", et LogD est le journal "appels abandonnés".

Avantageusement, l'unité de traitement 230 peut comprendre en outre:
- une unité SRT de déclenchement de souscription, apte à déclencher l'émission d'une requête de souscription sur réception d'une demande d'établissement d'une session de communication.

Les modules et unités décrits en relation avec les figures 5 et 6 peuvent être des modules ou unités matériels ou logiciels.

Les exemples de réalisation de l'invention qui viennent d'être présentés ne sont que quelques uns des modes de réalisation envisageables. Ils montrent que l'invention permet de mettre à jour avec des informations enrichies les bons journaux d'appels de terminaux même lorsque ceux-ci n'ont pas participé directement à l'appel. En outre, l'enrichissement des journaux d'appel sur la base d'informations générées par le réseau permet d'éviter les litiges entre utilisateurs et fournisseurs de services de télécommunication. Par exemple, la durée des appels ne peut être contestée, la mesure de la durée d'appel étant réalisée par le réseau et non plus par le terminal.

## Revendications

1. **Procédé** de notification d'événement, l'événement étant relatif au déroulement d'une procédure de traitement d'une session de communication, des équipements d'un ensemble étant associés à un utilisateur et susceptibles d'émettre ou de recevoir une demande d'établissement de la session, ou de prendre part à la session si elle est établie, le procédé comprenant :
• une étape (E2, F2, G2) de réception, en provenance d'un terminal dudit ensemble, dit terminal souscripteur, d'une requête de souscription à un service de notification d'événement pour au moins un dit événement susceptible de se produire sur un équipement dudit ensemble ,
• au moins une étape (E4, E8, E12, F3, F7, F11, F15, G3, G11, G15) de réception d'une information indicative d'une occurrence d'au moins un dit événement sur un équipement dudit ensemble, distinct dudit terminal souscripteur,
• au moins une étape (E6, E10, E14, F4, F8, F12, F16, G4, G12, G16) d'envoi à destination dudit terminal souscripteur d'une notification d'événement signalant ladite occurrence,
**caractérisé en ce que** l'au moins un événement est compris dans un groupe d'événements comprenant:
• une présentation d'appel,
• un décroché suite à présentation d'appel,
• une annulation d'appel avant décroché,
• un raccroché à la fin d'un appel,
• un renvoi d'un appel sur une messagerie.

2. **Procédé** de notification d'événement, selon la revendication 1, **caractérisé en ce que** l'information indicative d'une occurrence d'au moins un dit événement sur un dit équipement comprend un identifiant du dit équipement.

3. **Procédé** de notification d'événement, selon la revendication 1, **caractérisé en ce que** l'information indicative d'une occurrence d'au moins un dit événement sur un dit équipement comprend une information relative au type du dit équipement.

4. **Procédé** de notification d'événement, selon la revendication 1, **caractérisé en ce que**, lorsque le dit événement est indicatif de la fin de la dite procédure de traitement, la notification d'événement comprend une information relative à la fin de la souscription au service de notification d'événement, et l'étape d'envoi de la notification est suivi d'une étape de fin de la dite souscription au service de notification d'événement.

5. **Procédé** de mise à jour de journal d'appel, mis en œuvre par un équipement de communication d'un ensemble d'équipements associés à un utilisateur, dit terminal souscripteur, comprenant :
• une étape (H1) d'émission d'une requête de souscription à un service de notification d'événement pour au moins un événement relatif au déroulement d'une procédure de traitement d'une session de communication, et susceptible de se produire sur un équipement dudit ensemble,
• au moins une étape (H2) de réception d'une notification d'événement signalant une occurrence d'au moins un dit événement sur un dit équipement, distinct du terminal souscripteur,
• au moins une étape (H3) de détermination, en fonction de la notification d'événement reçue, si l'au moins un dit événement est indicatif de la fin de ladite procédure de traitement,
et **caractérisé en ce qu'**il comprend, lorsque l'au moins un dit événement est indicatif de la fin de ladite procédure de traitement:
• une étape (H4) de sélection d'un journal d'appel en fonction de l'au moins une notification reçue,
• une étape (H5) de mise à jour du journal d'appel sélectionné en fonction de l'au moins une notification reçue,
l'au moins un événement étant compris dans un groupe d'événements comprenant:
• une présentation d'appel,
• un décroché suite à présentation d'appel,
• une annulation d'appel avant décroché,
• un raccroché à la fin d'un appel,
• un renvoi d'un appel sur une messagerie.

6. **Procédé** de mise à jour de journal d'appels, selon la revendication 5, **caractérisé en ce que** l'étape (H1) d'émission d'une requête de souscription est déclenchée par la réception d'une demande d'établissement d'une session de communication.

7. **Dispositif** (100) de notification d'événement, l'événement étant relatif au déroulement d'une procédure de traitement d'une session de communication, des équipements d'un ensemble étant associés à un utilisateur et susceptibles d'émettre ou de recevoir une demande d'établissement de la session, ou de prendre part à la session si elle est établie, le dispositif comprenant :
• un module (140) de réception, en provenance d'un terminal dudit ensemble, dit terminal souscripteur, d'une requête de souscription à un service de notification d'événement pour au moins un dit événement susceptible de se produire sur un équipement dudit ensemble,
• un module (150) de réception d'une information indicative d'une occurrence d'au moins un dit événement sur un équipement dudit ensemble, distinct dudit terminal souscripteur,
• un module (160) d'envoi à destination dudit terminal souscripteur d'une notification d'événement signalant ladite occurrence,
**caractérisé en ce que** l'au moins un événement est compris dans un groupe d'événements comprenant:
• une présentation d'appel,
• un décroché suite à présentation d'appel,
• une annulation d'appel avant décroché,
• un raccroché à la fin d'un appel,
• un renvoi d'un appel sur une messagerie.

8. **Dispositif** (200) de mise à jour de journal d'appel, mis en œuvre par un équipement de communication d'un ensemble d'équipements associés à un utilisateur, dit terminal souscripteur, ledit dispositif comprenant :
• un module (240) d'émission d'une requête de souscription à un service de notification d'événement pour au moins un événement relatif au déroulement d'une procédure de traitement d'une session de communication, et susceptible de se produire sur un équipement dudit ensemble,
• un module (250) de réception d'une notification d'événement signalant une occurrence d'au moins un dit événement sur un dit équipement, distinct du terminal souscripteur,
et **caractérisé en ce qu'**il comprend :
• un module (Det) de détermination, en fonction de la notification d'événement reçue, si l'au moins un dit événement est indicatif de la fin de ladite procédure de traitement,
• un module (Sel) de sélection d'un journal d'appel en fonction de l'au moins une notification reçue,
• un module (Upd) de mise à jour du journal d'appel sélectionné en fonction de l'au moins une notification reçue,
l'au moins un événement étant compris dans un groupe d'événements comprenant:
• une présentation d'appel,
• un décroché suite à présentation d'appel,
• une annulation d'appel avant décroché,
• un raccroché à la fin d'un appel,
• un renvoi d'un appel sur une messagerie.

9. **Serveur d'application** (SA, SB) d'un réseau de communications, **caractérisé en ce qu'**il comprend un dispositif (100) de notification d'événement selon la revendication 7.

10. **Terminal** (TA', TB) connecté à un réseau de communications, **caractérisé en ce qu'**il comprend un dispositif (200) de mise à jour de journal d'appel selon la revendication 8.

11. **Système de gestion de journaux d'appel, caractérisé en ce qu'**il comprend au moins un serveur d'application (SA, SB) selon la revendication 9 et au moins un terminal (TA', TB) selon la revendication 10.

12. **Programme d'ordinateur, caractérisé en ce qu'**il comprend des instructions pour la mise en œuvre des étapes du procédé de notification d'événement selon la revendication 1, lorsque ce programme est exécuté par un processeur.

13. **Programme d'ordinateur, caractérisé en ce qu'**il comprend des instructions pour la mise en œuvre des étapes du procédé de mise à jour de journal d'appel selon la revendication 5, lorsque ce programme est exécuté par un processeur.

## Patentansprüche

1. Verfahren zur Ereignisbenachrichtigung, wobei das Ereignis sich auf den Ablauf einer Verarbeitungsprozedur einer Kommunikationssitzung bezieht, wobei Geräte einer Einheit einem Benutzer zugeordnet sind und eine Anforderung des Aufbaus der Sitzung senden oder empfangen oder an der Sitzung teilnehmen können, wenn sie aufgebaut ist, wobei das Verfahren enthält:
• einen Schritt (E2, F2, G2) des Empfangs, von einem Teilnehmer-Endgerät genannten Endgerät der Einheit, eines Teilnahmeantrags an einem Ereignisbenachrichtigungsdienst für mindestens ein Ereignis, das in einem Gerät der Einheit eintreten kann,
• mindestens einen Schritt (E4, ES, E12, F3, F7, F11, F15, G3, G11, G15) des Empfangs einer Information, die auf ein Auftreten mindestens eines Ereignisses in einem Gerät der Einheit hinweist, das sich vom Teilnehmer-Endgerät unterscheidet,
• mindestens einen Schritt (E6, E10, E14, F4, F8, F12, F16, G4, G12, G16) des Sendens einer das Auftreten signalisierenden Ereignisbenachrichtigung an das Teilnehmer-Endgerät,
**dadurch gekennzeichnet, dass**
das mindestens eine Ereignis in einer Gruppe von Ereignissen enthalten ist, die enthält:
• eine Anrufanzeige,
• ein Anrufannahme nach Anrufanzeige,
• eine Anrufannullierung vor Anrufannahme,
• ein Ablegen am Ende eines Anrufs,
• eine Weiterleitung eines Anrufs an einen Mitteilungsdienst.

2. Ereignisbenachrichtigungsverfahren nach Anspruch 1, **dadurch gekennzeichnet, dass** die auf ein Auftreten mindestens eines Ereignisses in einem Gerät hinweisende Information eine Kennung des Geräts enthält.

3. Ereignisbenachrichtigungsverfahren nach Anspruch 1, **dadurch gekennzeichnet, dass** die auf ein Auftreten mindestens eines Ereignisses in einem Gerät hinweisende Information eine Information bezüglich des Gerätetyps enthält.

4. Ereignisbenachrichtigungsverfahren nach Anspruch 1, **dadurch gekennzeichnet, dass**, wenn das Ereignis auf das Ende der Verarbeitungsprozedur hinweist, die Ereignisbenachrichtigung eine Information bezüglich des Endes der Teilnahme am Ereignisbenachrichtigungsdienst enthält, und auf den Schritt des Sendens der Benachrichtigung ein Schritt des Endes der Teilnahme am Ereignisbenachrichtigungsdienst folgt.

5. Anrufliste-Aktualisierungsverfahren, das von einem Teilnehmer-Endgerät genannten Kommunikationsgerät einer Einheit von einem Benutzer zugeordneten Geräten durchgeführt wird, das enthält:
• einen Schritt (H1) des Sendens eines Teilnahmeantrags an einem Ereignisbenachrichtigungsdienst für mindestens ein Ereignis, das sich auf den Ablauf einer Verarbeitungsprozedur einer Kommunikationssitzung bezieht und das in einem Gerät der Einheit eintreten kann,
• mindestens einen Schritt (H2) des Empfangs einer Ereignisbenachrichtigung, die ein Auftreten mindestens eines Ereignisses in einem Gerät signalisiert, das sich vom Teilnehmer-Endgerät unterscheidet,
• mindestens einen Schritt (H3) der Bestimmung, abhängig von der empfangenen Ereignisbenachrichtigung, ob das mindestens eine Ereignis auf das Ende der Verarbeitungsprozedur hinweist,
und **dadurch gekennzeichnet, dass** es, wenn das mindestens eine Ereignis auf das Ende der Verarbeitungsprozedur hinweist, enthält:
• einen Schritt (H4) der Auswahl einer Anrufliste abhängig von der mindestens einen empfangenen Benachrichtigung,
• einen Schritt (H5) der Aktualisierung der ausgewählten Anrufliste abhängig von der mindestens einen empfangenen Benachrichtigung,
wobei das mindestens eine Ereignis in einer Gruppe von Ereignissen enthalten ist, die enthält:
• eine Anrufanzeige,
• ein Anrufannahme nach Anrufanzeige,
• eine Anrufannullierung vor Anrufannahme,
• ein Ablegen am Ende eines Anrufs,
• eine Weiterleitung eines Anrufs an einen Mitteilungsdienst.

6. Anrufliste-Aktualisierungsverfahren nach Anspruch 5, **dadurch gekennzeichnet, dass** der Schritt (H1) des Sendens eines Teilnahmeantrags durch den Empfang einer Anforderung des Aufbaus einer Kommunikationssitzung ausgelöst wird.

7. Ereignisbenachrichtigungsvorrichtung (100), wobei das Ereignis sich auf den Ablauf einer Verarbeitungsprozedur einer Kommunikationssitzung bezieht, wobei Geräte einer Einheit einem Benutzer zugeordnet sind und eine Anforderung des Aufbaus der Sitzung senden oder empfangen oder an der Sitzung teilnehmen können, wenn sie aufgebaut ist, wobei die Vorrichtung enthält:
• ein Modul (140) zum Empfang, von einem Teilnehmer-Endgerät genannten Endgerät der Einheit, eines Teilnahmeantrags an einem Ereignisbenachrichtigungsdienst für mindestens ein Ereignis, das in einem Gerät der Einheit eintreten kann,
• ein Modul (150) zum Empfang einer Information, die auf ein Auftreten mindestens eines Ereignisses in einem Gerät der Einheit hinweist, das sich vom Teilnehmer-Endgerät unterscheidet,
• ein Modul (160) zum Senden einer das Auftreten signalisierenden Ereignisbenachrichtigung an das Teilnehmer-Endgerät,
**dadurch gekennzeichnet, dass** das mindestens eine Ereignis in einer Gruppe von Ereignissen enthalten ist, die enthält:
• eine Anrufanzeige,
• ein Anrufannahme nach Anrufanzeige,
• eine Anrufannullierung vor Anrufannahme,
• ein Ablegen am Ende eines Anrufs,
• eine Weiterleitung eines Anrufs an einen Mitteilungsdienst.

8. Anrufliste-Aktualisierungsvorrichtung (200), die von einem Teilnehmer-Endgerät genannten Kommunikationsgerät einer Einheit von einem Benutzer zugeordneten Geräten angewendet wird, wobei die Vorrichtung enthält:
• ein Modul (240) zum Senden eines Teilnahmeantrags an einem Ereignisbenachrichtigungsdienst für mindestens ein Ereignis betreffend den Ablauf einer Verarbeitungsprozedur einer Kommunikationssitzung und das in einem Gerät der Einheit eintreten kann,
• ein Modul (250) zum Empfang einer Ereignisbenachrichtigung, die ein Auftreten mindestens eines Ereignisses in einem Gerät signalisiert, das sich vom Teilnehmer-Endgerät unterscheidet,
und **dadurch gekennzeichnet, dass** sie enthält:
• ein Modul (Det) zur Bestimmung, abhängig von der empfangenen Ereignisbenachrichtigung, ob das mindestens eine Ereignis auf das Ende der Verarbeitungsprozedur hinweist,
• ein Modul (Sel) zur Auswahl einer Anrufliste abhängig von der mindestens einen empfangenen Benachrichtigung,
• ein Modul (Upd) zur Aktualisierung der ausgewählten Anrufliste abhängig von der mindestens einen empfangenen Benachrichtigung,
wobei das mindestens eine Ereignis in einer Gruppe von Ereignissen enthalten ist, die enthält:
• eine Anrufanzeige,
• ein Anrufannahme nach Anrufanzeige,
• eine Anrufannullierung vor Anrufannahme,
• ein Ablegen am Ende eines Anrufs,
• eine Weiterleitung eines Anrufs an einen Mitteilungsdienst.

9. Anwendungsserver (SA, SB) eines Kommunikationsnetzwerks, **dadurch gekennzeichnet, dass** er eine Ereignisbenachrichtigungsvorrichtung (100) nach Anspruch 7 enthält.

10. Endgerät (TA', TB), das mit einem Kommunikationsnetzwerk verbunden ist, **dadurch gekennzeichnet, dass** es eine Anrufliste-Aktualisierungsvorrichtung (200) nach Anspruch 8 enthält.

11. Anruflisten-Verwaltungssystem, **dadurch gekennzeichnet, dass** es mindestens einen Anwendungsserver (SA, SB) nach Anspruch 9 und mindestens ein Endgerät (TA', TB) nach Anspruch 10 enthält.

12. Computerprogramm, **dadurch gekennzeichnet, dass** es Anweisungen zur Durchführung der Schritte des Ereignisbenachrichtigungsverfahrens nach Anspruch 1 enthält, wenn dieses Programm von einem Prozessor ausgeführt wird.

13. Computerprogramm, **dadurch gekennzeichnet, dass** es Anweisungen zur Durchführung der Schritte des Anrufliste-Aktualisierungsverfahrens nach Anspruch 5 enthält, wenn dieses Programm von einem Prozessor ausgeführt wird.

## Claims

1. **Method** of event notification, the event relating to the progress of a procedure for processing a communication session, equipment of a set being associated with a user and able to send or to receive a request to establish the session, or to take part in the session if it is established, the method comprising:
• a step (E2, F2, G2) of receiving originating from a terminal of said set, termed subscriber terminal, a request for subscription to an event notification service for at least one said event liable to occur on an entity of said set,
• at least one step (E4, E8, E12, F3, F7, F11, F15, G3, G11, G15) of receiving an item of information indicative of an occurrence of at least one said event on an entity of said set, distinct from said subscriber terminal,
• at least one step (E6, E10, E14, F4, F8, F12, F16, G4, G12, G16) of dispatching, to said subscriber terminal, an event notification signaling said occurrence,
**characterized in that**
the at least one event is included in a group of events comprising:
• a call presentation,
• pick up following call presentation,
• call cancellation before pick up,
• hang up at end of call,
• forwarding of a call to a messaging facility.

2. **Method** of event notification, according to Claim 1, **characterized in that** the item of information indicative of an occurrence of at least one said event on a said entity comprises an identifier of said entity.

3. **Method** of event notification, according to Claim 1, **characterized in that** the item of information indicative of an occurrence of at least one said event on a said entity comprises an item of information relating to the type of said entity.

4. **Method** of event notification, according to Claim 1, **characterized in that**, when said event is indicative of the end of said processing procedure, the event notification comprises an item of information relating to the end of the subscription to the event notification service, and the step of dispatching the notification is followed by a step of ending said subscription to the event notification service.

5. **Method** of call log updating, implemented by a communication entity of a set of entities associated with a user, termed subscriber terminal, comprising:
• a step (H1) of sending a request for subscription to an event notification service for at least one event relating to the progress of a procedure for processing a communication session, and liable to occur on an entity of said set,
• at least one step (H2) of receiving an event notification signaling an occurrence of at least one said event on a said entity, distinct from the subscriber terminal,
• at least one step (H3) of determining, as a function of the event notification received, whether the at least one said event is indicative of the end of said processing procedure,
and **characterized in that** it comprises, when the at least one said event is indicative of the end of said processing procedure:
• a step (H4) of selecting a call log as a function of the at least one notification received,
• a step (H5) of updating the call log selected as a function of the at least one notification received,
the at least one event being included in a group of events comprising:
• a call presentation,
• pick up following call presentation,
• call cancellation before pick up,
• hang up at end of call,
• forwarding of a call to a messaging facility.

6. **Method** of call log updating, according to Claim 5, **characterized in that** the step (H1) of sending a subscription request is triggered by the reception of a request to establish a communication session.

7. **Device** (100) for event notification, the event relating to the progress of a procedure for processing a communication session, equipment of a set being associated with a user and able to send or to receive a request to establish the session, or to take part in the session if it is established, the device comprising:
• a module (140) for receiving, originating from a terminal of said set, termed subscriber terminal, a request for subscription to an event notification service for at least one said event liable to occur on an entity of said set,
• a module (150) for receiving an item of information indicative of an occurrence of at least one said event on an entity of said set, distinct from said subscriber terminal,
• a module (160) for dispatching, to said subscriber terminal, an event notification signaling said occurrence,
**characterized in that** the at least one event is included in a group of events comprising:
• a call presentation,
• pick up following call presentation,
• call cancellation before pick up,
• hang up at end of call,
• forwarding of a call to a messaging facility.

8. **Device** (200) for call log updating, implemented by a communication entity of a set of entities associated with a user, termed subscriber terminal, said device comprising:
• a module (240) for sending a request for subscription to an event notification service for at least one event relating to the progress of a procedure for processing a communication session, and liable to occur on an entity of said set,
• a module (250) for receiving an event notification signaling an occurrence of at least one said event on a said entity, distinct from the subscriber terminal,
and **characterized in that** it comprises:
• a module (Det) for determining, as a function of the event notification received, whether the at least one said event is indicative of the end of said processing procedure,
• a module (Sel) for selecting a call log as a function of the at least one notification received,
• a module (Upd) for updating the call log selected as a function of the at least one notification received,
the at least one event being included in a group of events comprising:
• a call presentation,
• pick up following call presentation,
• call cancellation before pick up,
• hang up at end of call,
• forwarding of a call to a messaging facility.

9. **Application server** (SA, SB) of a communications network, **characterized in that** it comprises an event notification device (100) according to Claim 7.

10. **Terminal** (TA', TB) connected to a communications network, **characterized in that** it comprises a call log updating device (200) according to Claim 8.

11. **System for managing call logs, characterized in that** it comprises at least one application server (SA, SB) according to Claim 9 and at least one terminal (TA', TB) according to Claim 10.

12. **Computer program, characterized in that** it comprises instructions for the implementation of the steps of the method of event notification according to Claim 1, when this program is executed by a processor.

13. **Computer program, characterized in that** it comprises instructions for the implementation of the steps of the method of call log updating according to Claim 5, when this program is executed by a processor.
